Europäisches Patentamt

(19) **European Patent Office**

**Office européen des brevets**

(11) Numéro de publication: **0 000 304**
**B1**

(12) **FASCICULE DE BREVET EUROPEEN**

(45) Date de publication du fascicule de brevet:
07.01.81

(51) Int. Cl.³: **B 07 C  3/08,** B 65 G  47/61

(21) Numéro de dépôt: **78400023.4**

(22) Date de dépôt: **16.06.78**

(54) Machine de tri d'objets et installation de manutention d'objets comportant au moins une telle machine de tri.

(30) Priorité: **05.07.77  FR 7720658**

(43) Date de publication de la demande:
**10.01.79 Bulletin 79/1**

(45) Mention de la délivrance du brevet:
**07.01.81 Bulletin 81/1**

(84) Etats contractants désignés:
**DE GB SE**

(56) Documents cités:
**DE-B-1 251 236**
**DE-B-1 265 044**
**FR-A-1 334 995**
**FR-A-1 541 475**
**FR-A-2 040 483**
**US-A-2 998 136**
**US-A-3 572 546**

(73) Titulaire: **HOTCHKISS-BRANDT SOGEME H.B.S., 186 rue du Faubourg St Honoré, F-75008 Paris (FR)**

(72) Inventeur: **de Rancourt de Mimerand, Yvan, "THOMSON-CSF" - SCPI 173, boulevard Haussmann, F-75360 Paris Cedex 08 (FR)**
Inventeur: **Goullet, Jean, "THOMSON-CSF" - SCPI 173, boulevard Haussmann, F-75360 Paris Cedex 08 (FR)**

(74) Mandataire: **Pierre, Michel et al, "THOMSON-CSF" - SCPI 173, boulevard Haussmann, F-75360 Paris Cedex 08 (FR)**

ACTORUM AG.

Machine de tri d'objets et installation de manutention d'objets comportant
au moins une telle machine de tri

La présente invention concerne une machine de tri d'objets et plus particulièrement une telle machine spécialement adaptée pour trier des objets portés par des pinces capables d'être décrochées d'un support fixe pour être accrochées sur un support mobile et vice-versa. Elle concerne également les installations de manutention d'objets portés par leur pince comportant au moins une machine de tri conforme à l'invention.

Le fait d'utiliser des pinces pour assurer la liaison entre les objets à trier et les supports mobiles ou fixes présentent de grands avantages dans la mesure où leur manipulation est facile à mettre en œuvre et assure toutes les garanties de fiabilité. De tels systèmes sont décrits dans la demande de brevet européen 78 40 00 22.6, publication no 451, déposéele 16 juin 1978 au nom de la Demanderesse. Il est souvent souhaitable d'augmenter la capacité de tri des machines mettant en œuvre de telles pinces sans pour cela accroître exagérément leurs dimensions.

La présente invention a pour but de résoudre ce problème et concerne une machine de tri d'objets portant chacun une indexation d'adressage et étant soutenu par une pince servant de liaison entre l'objet qu'elle porte et une succession de supports mobiles se présentant sous la forme de crochets entraînés en mouvement par un dispositif de transfert, une succession de supports fixes ou broches receptacles en nombre égal ou nombre d'adresses possibles, des organes de décrochage et d'accrochage, capable de décrocher chaque pince du crochet mobile qui la supporte pour l'accrocher à la broche receptacle correspondant à l'adressage de l'objet porté par cette pince lorsqu'il y a coïncidence entre la position du crochet et celle de la broche receptacle, caractérisée en ce que ces crochets et ces broches receptacles sont disposés sur deux niveaux d'une part sur une face avant et d'autre part sur une face arrière de la machine.

L'invention sera mieux comprise à l'aide des explications qui vont suivre et des figures jointes parmi lesquelles:
- la figure 1 montre un objet en forme de pochette soutenu par une pince;
- les figures 2, 3 et 4 représentent schématiquement, selon plusieurs vues, les éléments essentiels d'une machine de tri d'objets soutenus par une pince, conforme à l'invention;
- la figure 5 est une schematique d'un parcours des objets suspendus;
- la figure 6 représente l'agencement général d'une installation comportant une machine de tri selon l'invention;
- les figures 7 et 8 montrent les éléments essentiels d'un système de manutention capable de coopérer avec une machine de tri selon l'invention;
- les figures 9, 10 et 11, selon des vues différentes, représentent une forme de réalisation d'un organe de tuilage des objets;

- les figures 12 et 13 représentent, selon des vues différentes, une forme de réalisation d'un organe de prélèvement et d'accrochage des pinces;

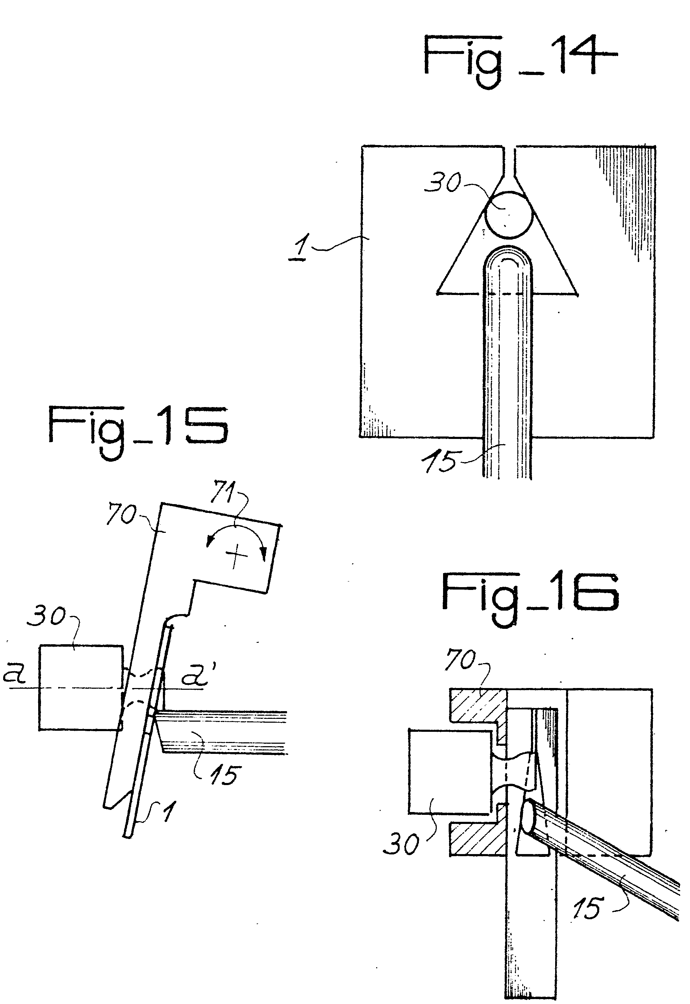

- les figures 14, 15 et 16 représentent, selon des vues différentes, un organe de décrochage des pinces.

Pour faciliter la compréhension, les mêmes éléments portent les mêmes références dans toutes les figures.

La présente invention concerne donc une machine de tri capable de recevoir les objets à trier soutenus chacun par une pince et de les orienter vers leur destination finale. Avant de décrire une telle machine de tri il convient donc auparavant de voir quel type de pinces est le mieux adapté pour coopérer avec la combinaison des moyens mise en œuvre dans une machine selon l'invention.

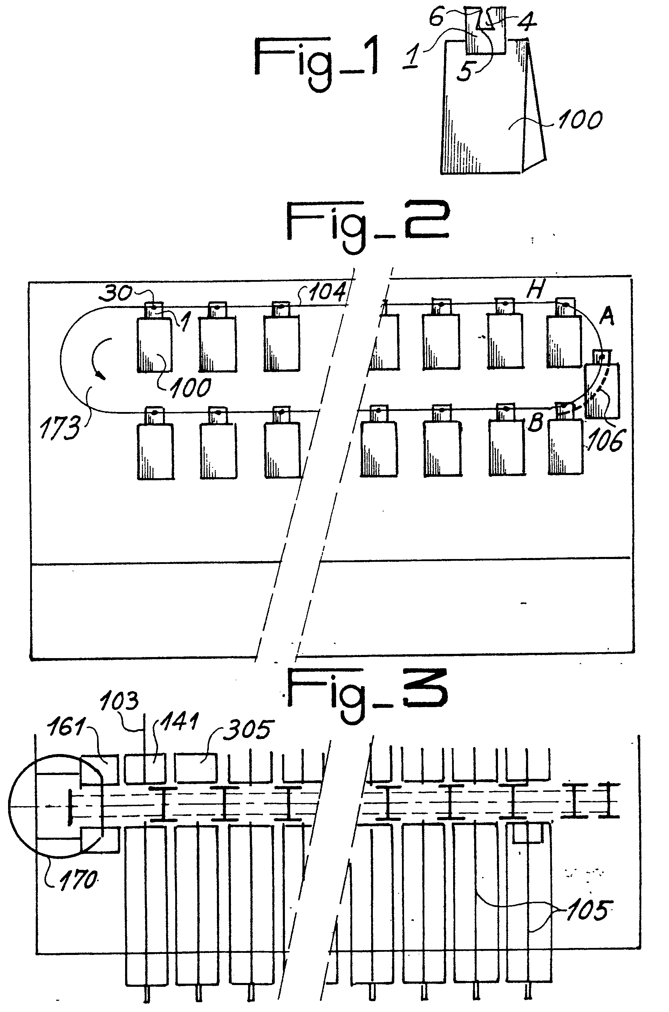

Comme le montre la figure 1 chaque objet 100 est soutenu par une pince 1 de préférence du type de celui qui est décrit dans la demande de brevet européen 78 40 00 22.6 déposée le 16 juin 1978 au nom de la demanderesse. Il s'agit d'une pince servant de liaison entre un objet (la pochette dans le cas présent) et un support fixe ou mobile. Elle est caractérisée par la combinaison qui est faite du choix du matériau dans lequel elle est réaliséé, coopérant avec la configuration particulière qui lui est donnée pour permettre son accrochage, son décrochage et éventuellement le tuilage de plusieurs pinces et des objets qu'elles porteut, ces opérations pouvant être effectuées dans les conditions les plus difficiles par exemple dans le cas où elles doivant être réalisées automatiquement et à la volée.

Une telle pince 1 portant un objet 100, par exemple, une pochette représentée sur la figure 1 comporte une ouverture 4 faite dans toute l'épaisseur de la pince selon un profil 5 libérant une fente 6 ouverte de préférence sur le milieu du côté supérieur de la pince. Le profil de cette ouverture est très important; en effet, il contribue à l'accomplissement d'au moins deux fonctions essentielles. D'une part, il délimite une ouverture suffisamment grande pour permettre à un support d'y pénétrer facilement, même si la pince et ce support sont animés d'un mouvement relatif important l'un par rapport à l'autre (opération effectuée à la volée). D'autre part il doit conduire à une configuration de parois facilitant le glissement de la pince sur son support jusqu'à ce qu'un état d'équilibre s'établisse. Un profil évolutif délimitant une surface décroissant de la fente jusqu'à la base de l'ouverture remplit cette condition, c'est pourquoi d'ailleurs, le profil triangulaire représenté sur la figure 1 pour cette ouverture 4 est plus particulièrement adapté pour l'accomplissement de ces deux fonctions. En effet la base du triangle peut être choisie en fonction de l'application considérée et assurer ainsi les conditions nécessaires à l'accomplissement de la première fonction (pénétration du support à la volée). Il est tenu compte dans chaque cas des dimensions du support. Les côtés du triangle constituant les parois de l'ouverture présentent une pente également adaptable à l'application considérée et capable de favoriser le glissement dont il a été question précédemment. Le sommet du triangle coïncide avec la fente 6 dont la section présente une surface inférieure à celle du support. Elle délimite deux parties situées de part et d'autre d'un plan passant, par exemple, par l'axe de la fente. Compte tenu de sa présence, les deux parties peuvent être décalées par rapport à ce plan dans un sens inverse l'une de l'autre, libérant ainsi un espace libre qui facilite le décorochage de la pince. Néanmoins pour que cela se réalise correctement et c'est là qu'intervient la nature du matériau, il faut que celui-ci présente, tout d'abord un coëfficient d'élasticité suffisamment élevé pour que, compte tenu de l'épaisseur de la pince, la déformation ne soit pas permanente, la pince par effet de ressort retrouvant alors automatiquement sa forme initiale à la fin de l'opération de décrochage. Mais il faut également que ce matériau présente un coëfficient de frottement faible pour ne pas s'opposer au glissement de la pince mais au contraire l'accentuer encore. Il existe sur le marché; des matières plastiques remplissant ces conditions, faciles à mettre en œuvre par injection, découpage ou moulage. Des bossages peuvent être prévus sur les pinces. Ils servent alors d'entretoises dans les cas où une succession de pinces est utilisée et où une distance déterminée doit être respectée entre chaque pince.

La machine de tri conforme à l'invention est constituée comme le montrent les figures 2, 3 et 4 d'une part, d'un dispositif assurant l'entrée des pochettes 100 portées par leur pince 1 dans la machine de tri se présentant sous la forme d'une broche de stockage dite broche intermédiaire 103 sur laquelle les pochettes ont été embrochées par tout moyen de manutention manuel ou automatique et d'autre part d'un dispositif de transfert 104 constitué d'une chaîne munie de crochets 30 sur au moins une face, mais de préférence sur les deux faces. Des roues motorisées 173 assurent le déplacement de la chaîne 104 et le changement de niveau de B vers H.

Deux dispositifs de tuilage tel que 106 évitent aux pochettes de s'accrocher entre elles lors du changement de niveau. Le tuilage est une opération qui consiste à recourir les uns sur les autres les objets suspendus aux pinces. Des organes de prélèvement et d'accrochage 141 sont chargés de prélever, une par une, les pochettes stockées sur la broche intermédiaire 103 et de les accrocher sur les crochets 30 de la chaîne 104. Une succession de broches receptacles 105 en nombre égal à celui des directions possibles de tri est prévue. Quand une pince portant son objet dont l'adresse a été préalablement lue par un moyen de lecture approprié 305 se présente devant la broche réceptacle qui correspond à sa destination, un ordre est donné à un organe de décrochage 161 de décrocher la pince tout en permettant son embrochage sur la broche réceptacle à laquelle l'objet qu'elle porte est destiné.

Pour augmenter la capacité de tri de la machine sans pour cela accroître exagérément ses dimensions, une disposition caractéristique de l'invention peut être réalisée. Les broches réceptacles 105 dans ce cas sont disposées de telle sorte qu'elles équipent les deux niveaux haut et bas (H et B) et ceci sur chacune des deux faces avant et arrière de la machine. Un dispositif de changement de niveau 106 ou dispositif de tuilage et un dispositif de changement de face sont alors prévus et permettent le fonctionnement correct d'une machine de tri construite selon cet agencement. Le dispositif de changement de face comporte un organe de décrochage 161 fixe, une broche hélicoïdale 170, un organe d'accrochage 141 des pchettes à partir de cette broche 170 sur un crochet 30 de la chaîne de transfert située sur la face avant. La dernière broche réceptacle du niveau haut de la face avant sur laquelle viennent s'accrocher les pochettes non adressées en raison d'une erreur notamment de lecture ou d'adressage correspond à une direction de rebut.

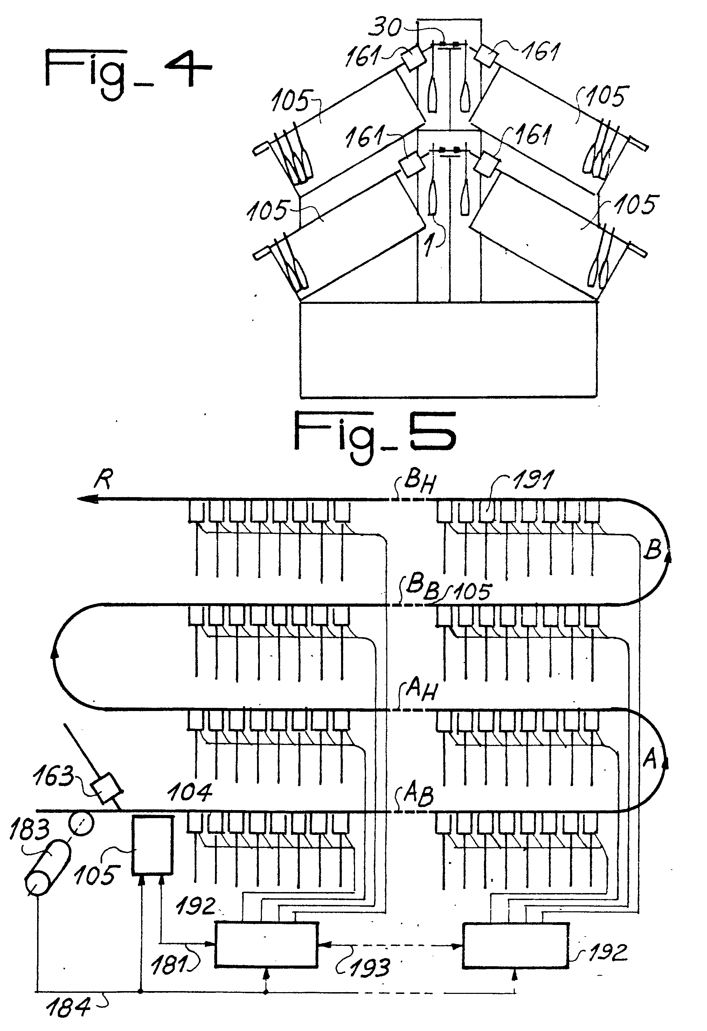

La figure 5 permet de mieux comprendre le fonctionnement d'une machine de tri conforme à l'invention. Les pochettes sont suivies individuellement à partir de la tête de lecture. La perte d'une pochette lors d'un accrochage, d'un décrochage ou d'un changement de face entraîne l'arrêt de la machine qui redémarre après l'intervention d'un opérateur. Un dispositif logique de commande 163 assure la distribution des pochettes sur les crochets de la chaîne de transfert 104. Une horloge 183 assure la synchronisation des opérations. A chaque avance d'un pas de la chaîne correspond une impulsion de l'horloge sur la ligne 184. Le pas est choisi de façon à assurer une fréquence de l'horloge compatible avec le dispositif de commande et une précision suffisante pour permettre les commandes de décrochage et d'accrochage. La tête de lecture lit les codes d'indexation portés par les pochettes et les traduit en des adresses de broches réceptacles 105. Un circuit de liaison 181 transmet ces adresses à un circuit logique 192 qui contrôle l'acheminement des objets et fournit à une logique d'aiguillage 191 l'ordre de décrochage des pochettes lorsqu'elles sont arrivées à destination. Des circuits de liaison 193 assurent la transmission des adresses des pochettes qui passent d'une zone de transfert contrôlée par un circuit logique 192 à une autre zone de transfert contrôlée par un autre circuit logique 192. Les objets progressent dans le sens indiqué par les flèches depuis la face avant A en passant du niveau bas $A_B$ au niveau haut $A_H$ vers la face arrière B également du niveau bas $B_B$ au niveau haut $B_H$. Les objets qui n'ont été dirigés vers aucune broche réceptacle sont conduits vers une direction de rebut R.

Une machine de tri conforme à l'invention trouve une application dans toute installation de traitement d'objets comportant au moins une opération de tri quelque soient les opérations effectuées en amont ou en aval de la zone de triage.

Pour mieux illustrer l'invention une application de la machine de tri est maintenant décrite. Il s'agit d'une installation destinée a trier les pochettes de travaux photographiques après facturation. Un laboratoire traite des travaux qui lui parviennent de diverses sources, et notamment des revendeurs, (droguistes, bureaux de tabac, photographes) lesquels servent d'intermédiaires avec la clientèle. Les pellicules sont placées dans un pochette normalisée sur laquelle des informations sont imprimées en code et/ou en clair ainsi que des informations relatives à la demande du client. Ces pochettes sont collectées par un service de ramassage suivant une fréquence qui est variable selon l'importance des revendeurs et/ou des laboratoires.

Lorsqu'elles arrivent au laboratoire, elles sont vidées de leur contenu qui est inséré dans le cycle de fabrication avec un repère. En fin de cycle, les tirages retrouvent leur pochette d'origine. La lecture automatique des données permanentes, complétées par l'insertion des données spécifiques du client, conduisent à l'édition des données de facturation. On conçoit à ce moment que les pochettes ont perdu leur ordre d'origine et qu'elles doivent être triées pour pouvoir être affectées au véhicule assurant le circuit de distribution adéquat. Les pochettes sont rendues solidaires de pinces telles que décrites précédemment au moyen de la figure 1.

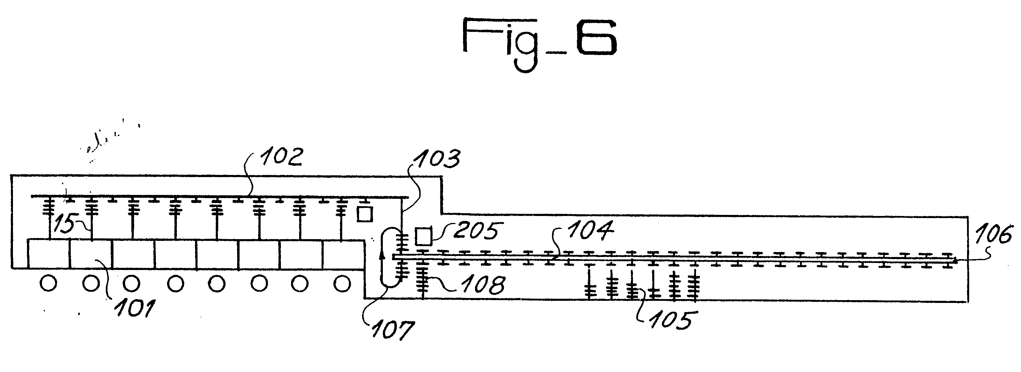

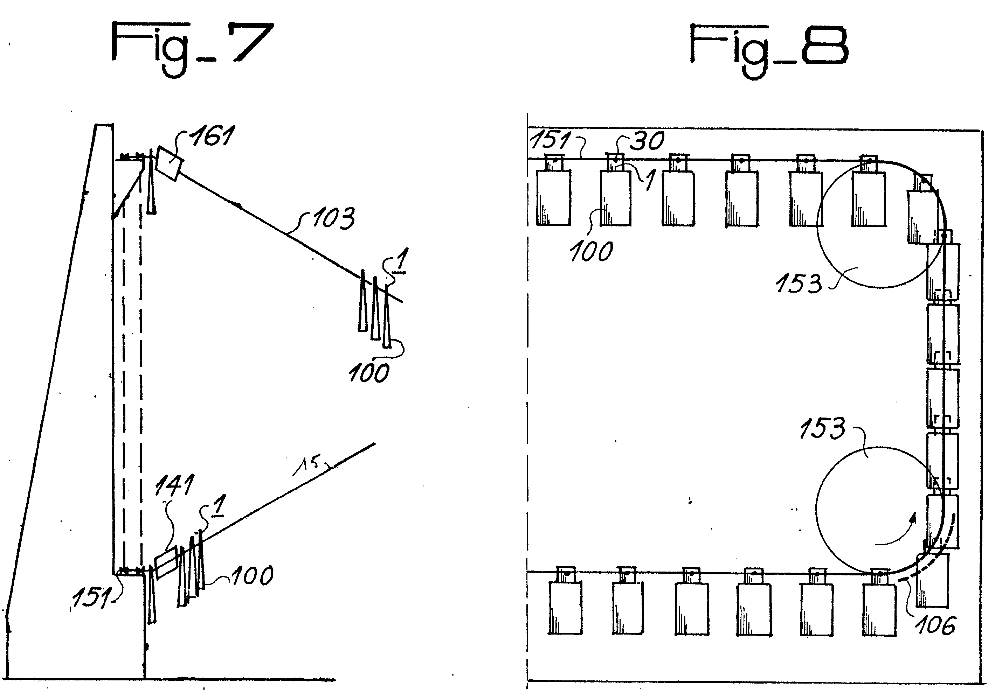

Les figures 6 et 7 illustrent l'agencement général d'une installation conforme à l'invention plus particulièrement adaptée au tri des pochettes photographiques après facturation. Comme cela a été dit précédemment une installation de ce type conviendrait également pour toute application comportant au moins une opération de tri et ceci quelle que soit la nature des postes de travail se trouvant en amont et en aval de la machine de tri proprement dite.

Une telle installation est constituée essentiellement d'au moins une machine de tri du type de celle qui a été décrite précédemment et d'un système de manutention chargé de prélever les objets au niveau d'un poste de travail (à savoir dans l'exemple décrit, les postes de facturation) et de les acheminer vers la machine de tri proprement dite.

Ces pochettes 100 munies de leurs pinces 1 portant une indexation d'adressage arrivent aux postes de facturation qui impriment la facture du client, auteur de la commande des travaux photographiques. Les pochettes sont prises une par une par un ou plusieurs opérateurs qui exécutent les opérations de facturation puis accrochent les pochettes sur des broches de stockage 15 placées devant eux. Celles-ci sont prélevées une par une pour être accrochées au moyen d'un organe d'accrochage 141 à un premier dispositif de transfert 102 qui les entraîne vers une broche intermédiaire 103 assurant la liaison entre le dispositif de transfert et la machine de tri proprement dite. Un organe de décrochage (161) assure l'embrochage des pochettes sur cette broche intermédiaire 103. Elles sont alors à nouveau prélevées une par une au niveau de la broche intermédiaire 103 et accrochées à un second dispositif de transfert (104) faisant partie de la machine de tri. Elles défilent devant un dispositif de reconnaissance d'index 205 qui agit sur des moyens de décrochage capable de les enfiler sur une broche réceptacle 105. A chaque adresse correspond une broche réceptacle déterminée. Les objets mal adressés sont acheminés vers une broche de rebut 108.

Lorsque l'une des broches réceptacles est pleine, son contenu est déchargé dans une caissette de manutention. Celles-ci sont ensuite regroupées par lot de distribution avec des moyens de manutention qui ne font pas partie de la présente invention.

On retrouve les principaux éléments et organes déjà décrits lors de la description de la machine de tri proprement dite. Des exemples de réalisation de ces principaux organes, de tuilage 106, d'accrochage 141, de décrochage 161 utilisés aussi bien dans la zone de manutention que dans la zone de tri (machine de tri et ses accessoires) sont maintenant décrits.

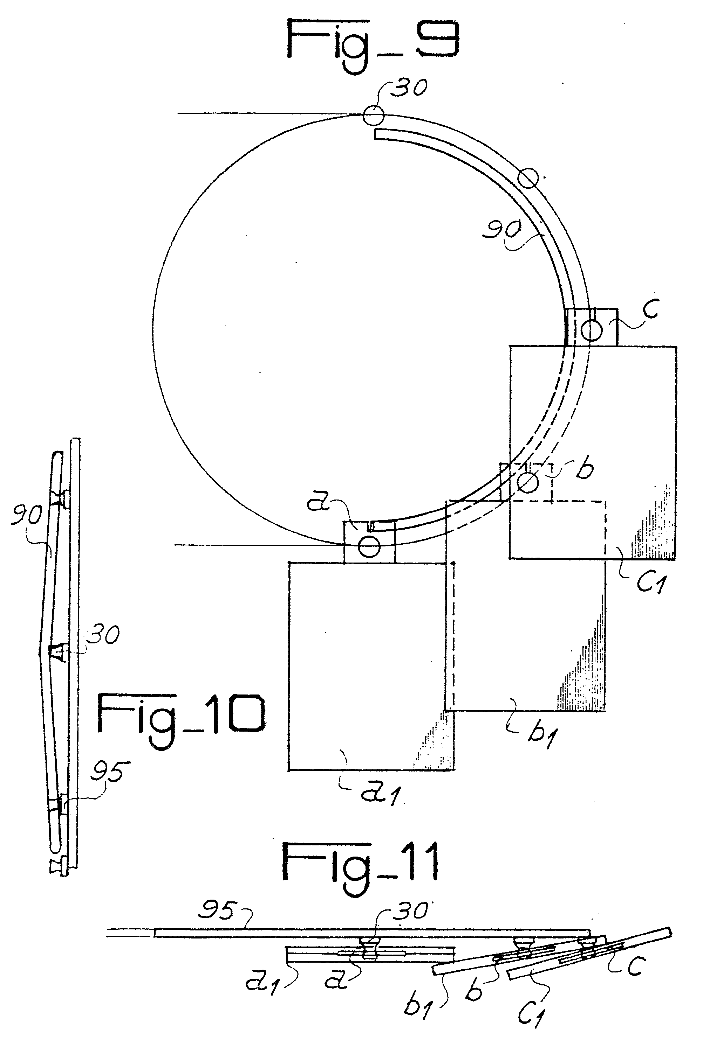

Comme le montre la figure 8, le dispositif de manutention est constitué d'une chaîne 151, du même type, par exemple, que celle qui équipe le dispositif de transfert de la machine de tri proprement dite, munie sur sa face avant de crochets tels que 30 pouvant recevoir les pochettes 100 par l'intermédiaire des pinces 1. Des roues motorisées 153 assurent le déplacement de la chaîne 151. Un dispositif de tuilage 106 des pochettes dans les virages assure le passage de celles-ci d'un niveau bas vers un niveau haut (ou vice versa). Le sens de défilement des objets ets inversé à chaque niveau et les moyens d'accrochage des pinces doivent se déplacer toujours dans un plan vertical. Il est donc indispensable de faire passer les pinces et les objets qu'ils portent les uns par dessus les autres pendant une rotation des moyens d'entraînement de 180°. Cette opération est définie comme étant une opération de tuilage et elle est réalisée au moyen d'un organe dit de tuilage (référencé 106) sans que se produise un éloignement sensible des objets. Un organe de ce type est décrit dans la demande de brevet européen 78400022.6, (publication no. 451), déposée le 16 juin 1978 au nom de la Demanderesse. Il est essentiellement constitué comme le montrent les figures 9, 10 et 11 d'une came 90 concentrique à la trajectoire des crochets 30 et présentant un profil adapté qui fait privoter les pinces (a), (b), (c). (portant leurs objets $[a_1]$, $[b_1]$ $[c_1]$) autour de leur axevertical pendant une partie de la rotation de manière à leur imprimer une légère rotation sur le crochet 30, assurant ainsi le tuilage c'est-à-dire le recouvrant les uns sur les autres des objets suspendus aux pinces.

La figure 11 sur laquelle apparaît clairement le commencement de recouvrement allant en s'accentuant des pinces (a), (b) et (c) illustre cette opération. Lorsque celle-ci est terminée, et que les objets se trouvent pratiquement les uns sur les autres, la came 90 infléchit son profil pour permettre aux pinces de retrouver leur position d'équilibre. Il faut toutefois noter que cette opération est d'autant plus facile à réaliser que les objets sont plus plats.

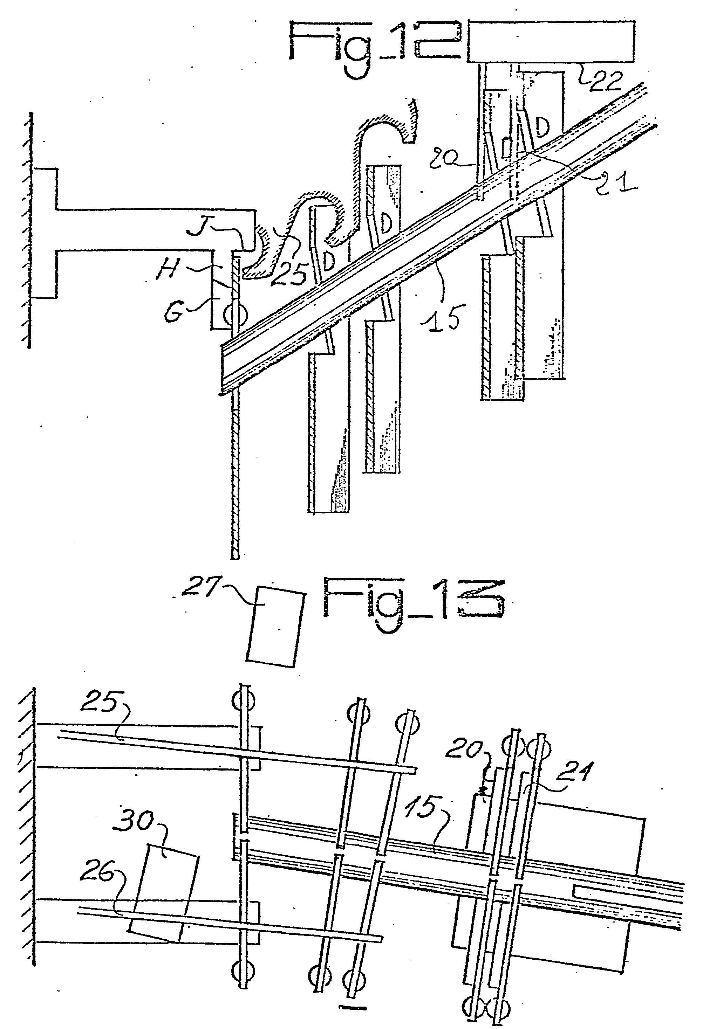

Le prélèvement et l'accrochage des pinces prélevées au niveau d'une broche qu'il s'agisse d'une broche de stockage 15 du dispositif de manutention M ou de la broche intermédiaire 103 (accessoire de la machine de tri conforme à l'invention) peut être réalisé au moyen d'un organe d'acrochage 141 tel qu'il est décrit dans la demande de brevet européen 78400022.6 déposée le 16.6.78 au nom de la Demanderesse. Il est essentiellement constitué comme le montrent les figures 12 et 13 d'un répartiteur unitaire coopérant avec le dispositif d'accrochage proprement dit.

Le répartiteur reçoit les pinces, les unes derrière les autres sur une broche inclinée 15, et la première pince vient en butée sur la seconde guillotine 20, la première guillotine 21 étant relevée. La première guillotine 21 s'abaisse, entre la première et la seconde pince qui la suit et retient la seconde pince pendant que la première pince est libérée par le relèvement de la seconde guillotine 20. Ces deux guillotines sont liées par un système à leviers, lui-même commandé par un électroaimant 22. Le mouvement alternatif des deux guillotines assure la répartition unitaire des pinces, au moment désiré. Le dispositif d'accrochage «à la volée» proprement dit qui reçoit à partir de la broche concernée 15 les pinces une à une, est constitué par un organe de poussée chargé de plaquer les pinces contre un jeu de butées comme cela est expliqué plus clairement ci-dessous. Celui-ci peut être par exemple un ensemble de deux roues à rochet 25 et 26 de diamètre différent, ayant le même nombre de dents et calées sur un même axe incliné par rapport à la trajectoire des crochets destinés à recevoir les pinces et aussi par repport à l'axe de la broche. Elles sont entraînées par un moteur «pas à pas» ou tout autre système à rochet et indexation. Le profil des dents est particulier en ce qu'il convient à la réception unitaire des pinces et par conséquent des objets, et – leur poussée en appui sur des butées (H et G) qui forment avec l'axe de la broche un angle inférieur à 90°. Il en résulte une position inclinée des pinces qui est indispensable à la fonction «accrochage à la volée» des pinces sur les supports mobiles tel que le crochet 30 qui peut ainsi pénétrer dans l'orifice triangulaire de la pince et entraîner celle-ci. Le maintien en position sensiblement verticale des pinces pendant le durée de l'accrochage est obtenu par le moyen d'une butée (J) qui limite la rotation de la pince dans un plan vertical, ce qui a pour effet d'éviter un fort balancement de la pince juste après son transfert sur le crochet concerné. L'accrochage se fait de la manière suivante: Le crochet 30 ayant pénétré dans l'orifice triangulaire de la pince fait légèrement tourner celle-ci autour de la broche jusqu'à ce que la butée (J) stoppe cette rotation. Le crochet, poursuivant sa course, provoque un décalage des bords de la fente de la pince qui échappe à la fois à l'extrémité de la broche (15) et à la butée (H), plus courte que la butée (G). La pince reprend, par son élasticité, sa forme primitive (bords de la fente, l'un en face de l'autre) et se trouve suspendue sur le crochet d'entraînement 30. La trajectoire du système de transfert ou de manutention est perpendiculaire à l'axe de la broche. Les commandes du répartiteur et du dispositif d'accrochage, déjà synchronisées, doivent également l'être, avec le passage d'un crochet libre, de manière à ce que chaque pince soit déjà en appui sur ses butées (H et G) avant que ce crochet libre, ne pénètre dans l'orifice triangulaire de la pince à accrocher.

Un organe de commande logique, par exemple, peut être prévu pour interdire l'approche d'une pince sur ses butées (H et G) tant qu'un crochet libre n'est pas annoncé par un détecteur de proximité. L'accrochage dans ces conditions est donc automatique.

L'organe de décrochage 161 peut être notamment du type de celui qui est décrit dans la demande de brevet européen déjà référencée ci-dessus. Un exemple de réalisation d'un tel organe de décrochage est décrit au moyen des figures (14, 15 et 16). Ce système à pour but de transférer automatiquement les pinces supportant les objets des crochets 30 en mouvement dans un sens déterminé vers une broche réceptrice fixe par exemple 15 inclinée vers le bas. Ce résultat est obtenu au moyen d'une came 70 présentant la configuration d'une fourchette. Le profil de celle-ci est tel qu'il fait glisser les pinces sur le crochet concerné, dans l'axe de celui-ci, au moment où la broche réceptrice 15 se trouve en face de l'ouverture triangulaire de la prince. Si la came est maintenue en position fixe chaque pince glisse sur la pente rectiligne de la came et au moment où la broche réceptrice se trouve en face de l'ouverture triangulaire de la pince, la partie curviligne de la came 70 termine brusquement le mouvement de décrochage.

L'installation décrite ci-dessus peut être améliorée en y associant d'autres fonctions. On peut en effet avec une telle combinaison de moyens prévoir une gestion qualitative et quantitative des pochettes, ainsi que des opérations de suivi individuelles des pochettes depuis leur entrée dans l'un des postes de facturation jusqu'à la sortie de la machine de tri de façon à éviter la perte de l'une d'entre elles.

La présente invention a de nombreuses applications autres que celles qui ont été décrites précédemment. Elle peut s'appliquer notamment au stockage et au déstockage automatique de produits de grande consommation, par exemple de certains produits de quincaillerie, de la préparation automatique de colis individualisés, constitués de petits objets de nature différente. Elle peut s'appliquer aussi au classement et à la recherche automatique de documents.

L'agencement de la machine de tri et d'une installation conformes à l'invention est modulaire du point de vue 5 mécanique, électrique et électronique par exemple par module de 32 directions ce qui donne une grande souplesse au niveau de sa fabrication.

**Revendications**

1. Machine de tri d'objets portant chacun une indexation d'adressage et étant soutenu par une pince (1) servant de liaison entre l'objet qu'elle porte et une succession de supports mobiles se présentant sous la forme de crochets (30) entraînés en mouvement par un dispositif de transfert, une succession de supports fixes ou broches receptacles (105) en nombre égal au nombre d'adresses possibles, des organes de décrochage et d'accrochage, capable de décrocher chaque pince (1) du crochet mobile (30) qui la supporte pour l'accrocher à la broche receptacle (105) correspondant à l'adressage de l'objet porté par cette pince (1) lorsqu'il y a coïncidence entre la position du crochet (30) et celle de la broche receptacle (105), caractérisée en ce que ces crochets (30) et ces broches receptacles (105) sont disposés sur deux niveaux d'une part sur une face avant et d'autre part sur une face arrière de la machine.

2. Machine de tri selon la revendication 1, caractérisée en ce qu'elle comprend en outre un organe de tuilage (106) capable d'assurer le recouvrement des pinces (1) et des objets durant leur passage du niveau bas au niveau haut ainsi qu'un dispositif de changement de face capable d'assurer le passage des objets de l'une des faces vers l'autre, du niveau haut au niveau bas.

3. Machine de tri selon la revendication 2, caractérisée en ce que le dispositif de changement de face comporte: une broche hélicoïdale (170), un organe de décrochage (161) chargé de décrocher une pince (1) du crochet (30) qui la supporte sur l'une des faces de la machine pour l'accrocher à cette broche hélicoïdale (170); un organe de prélèvement et d'accrochage (141) pour prélever la pince de cette broche hélicoïdale (170) pour l'accrocher sur un nouveau crochet (30) appartenant à l'autre face de la machine.

4. Installation de manutention d'objets comprenant au moins une broche de stockage capable de recevoir des pinces supportant des objets à trier en provenance d'un poste de travail, caractérisée en ce qu'elle est équipée d'une machine de tri conforme à l'une des revendications précédentes.

5. Installation de manutention d'objets selon la revendication 4, caractérisée en ce que la machine de tri coopère avec un poste de facturation de produits photographiques contenus dans des pochettes supportées par des pinces, cette machine de tri aussurant le transfert de chaque pochette vers sa destination finale, en fonction de l'indexation imprimée sur chaque pochette.

**Patentansprüche**

1. Maschine zum Sortieren von Objekten, die jeweils mit einer Adressierungsangabe versehen sind und von einer Klemme (1) gehalten sind, die als Verbindung zwischen dem von ihr gehaltenen Objekt und einer Folge von beweglichen Trägern dient, die die Form von Haken (30) haben, die von einer Überführungsvorrichtung in Bewegung versetzt sind, mit einer Folge von festen Trägern oder Aufnahmedornen (105), deren Anzahl gleich der Anzahl der möglichen Adressen ist, Abhänge- und Aufhängeorgane, die jede Klemme (1) von den sie tragenden beweglichen Haken (30) abhängen, um sie auf den Aufnahmedorn (105) zu hängen, der der Adressierung des von dieser Klemme (1) getragenen Objekts entspricht, wenn Koinzidenz zwischen der Position des Hakens (30) und der Position des Aufnahmedorns (105) vorliegt, dadurch gekennzeichnet, dass die Haken (30) und die Aufnahmedorne (105) einerseits an einer Vorderseite und andrerseits an einer Hinterseite der Maschine auf zwei Niveaus angeordnet sind.

2. Maschine nach Anspruch 1, dadurch gekennzeichnet, dass sie ausserdem ein Übereinanderschichtungsorgan (106) enthält, das das Überlappen der Klemmen (1) und der Objekte während des Übergangs vom tiefen Niveau auf das hohe Niveau gewährleisten kann, und dass sie eine Wechselvorrichtung aufweist, die die Objekte von einer der Seiten zur anderen vom hohen Niveau zum niedrigen Niveau überführen kann.

3. Maschine nach Anspruch 2, dadurch gekennzeichnet, dass die Wechselvorrichtung folgendes enthält: einen wendelförmigen Dorn (170), ein Abhängeorgan (161) zum Abhängen einer Klemme (1) von dem sie tragenden Haken (30) an einer Seite der Maschine und zum Aufhängen auf diesem wendelförmigen Dorn (170), ein Abnahme- und Aufhängeorgan (141) zum Abnehmen der Klemme von dem wendelförmigen Dorn (170) und zum Aufhängen der Klemme an einem neuen Haken (30), der einer anderen Seite der Maschine angehört.

4. Anlage zum Handhaben von Objekten mit wenigstens einem Speicherdorn, der Klemmen aufnehmen kann, die zu sortierende, von einem Arbeitsgerät kommende Objekte tragen, dadurch gekennzeichnet, dass sie mit einer Sortiermaschine nach einem der vorhergehenden Ansprüche ausgestattet ist.

5. Anlage nach Anspruch 4, dadurch gekennzeichnet, dass die Sortiermaschine mit einem Rechnungsstellungs-Gerät für photographische Produkte zusammenarbeitet, die in Taschen enthalten sind, die von der Klemme gehalten werden, und dass die Sortiermaschine die Überführung jeder Tasche zu ihrem Endziel abhängig von der auf jeder Tasche aufgedruckten Angabe gewährleistet.

**Claims**

1. Machine for sorting articles which are each provided with an address indication and are held by a clamp (1) which serves as connection between the article held thereby and a succession of moveable supports which have the form of hooks (30) which are set in movement by a transfer means, comprising a succession of fixed supports or receiving mandrels (105) whose number is equal to the number of possible addresses, unhooking and hanging means which unhook each clamp (1) from the moveable hooks (30) supporting said clamp to hang said clamp on the receiving mandrel (105) which corresponds to the address of the article carried by said clamp (1) when coincidence exists between the position of the hook (30) and the position of the receiving mandrel (105), caracterized in that the hooks (30) and the receiving mandrel (105) are disposed at two levels on the one hand at a front face and on the other at a rear face of the machine.

2. Machine according to claim 1, characterized in that it also includes a superposition means (106) which can ensure the overlapping of the clamps (1) and the articles during the transfer from the low level to the high level and that it comprises a changing means which can transfer the articles from one of the sides to the other from the higher level to the lower level.

3. Machine according to claim 2, characterized in that the changing means comprises the following: a spiral mandrel (170), an unhooking means (161) for unhooking a clamp (1) from the hook (30) carrying said clamp on one side of the machine and for suspending said clamp on said spiral mandrel (170), a removal and hanging means (141) for removing the clamp from the spiral mandrel (170) and for hanging the clamp on a new hook (30) which belongs to another side of the machine.

4. System for handling articles comprising at least one storage mandrel which can receive clamps which carry articles to be sorted coming from a working means, characterized in that it is provided with a sorting machine according to one of the preceding claims.

5. System according to claim 4, characterized in that the sorting machine cooperates with an accounting means for photographic products which are contained in bags or envelopes which are held by the clamp and that the sorting machine guarantees the transfer of each bag to its final destination in dependence upon the indication printed on each bag.

Fig_1

Fig_2

Fig_3

Fig_4

Fig_5

0 000 304

11

Fig_6

102    103

15    205    104    106

101    108    105

107

# Fig_7

# Fig_8

161

103

1

100

141

1

15

151

100

151    30

1

100

153

153

106

# Fig_9

30

90

c

b

a

C1

90

b1

30

a1

95

# Fig_10

# Fig_11

95

30

a1

a

b1

b

c

C1

0 000 304

Fig_12

J

H

G

25

D

D

D

20

21

22

15

27

Fig_13

25

30

26

20

15

21

19

Fig_14

Fig_15

Fig_16